# EUROPÄISCHE PATENTSCHRIFT

(11) **EP 0 855 540 B1**
(45) Veröffentlichungstag und Bekanntmachung des Hinweises auf die Patenterteilung: **06.02.2002**
(21) Anmeldenummer: 97120522.4
(22) Anmeldetag: 22.11.1997
(51) Int. Cl.: F16H 61/30

(54) **Stelleinrichtung zur Automatisierung von Handschaltgetrieben von Fahrzeugen, insbesondere von Kraftfahrzeugen**
Gear change device for automation of manual gearboxes, especially for motor vehicles
Dispositif de commande pour automatiser le changement de vitesse pour boîte de vitesses manuelle en particulier des véhicules automobiles

(30) Priorität: 25.01.1997 DE 19702656
(43) Veröffentlichungstag der Anmeldung: 29.07.1998
(73) Patentinhaber: HYDRAULIK-RING ANTRIEBS- UND STEUERUNGSTECHNIK GmbH, D-72622 Nürtingen (DE)
(72) Erfinder: Tischer, Dieter, 73240 Wendlingen (DE); Meyer, Roland, 91154 Roth (DE)
(74) Vertreter: Kohl, Karl-Heinz

(56) Entgegenhaltungen:
- EP-A- 0 350 812
- EP-A- 0 651 183
- FR-A- 2 100 406
- US-A- 5 279 172

## Beschreibung

Die Erfindung betrifft eine Stelleinrichtung zur Automatisierung von Handschaltgetrieben von Fahrzeugen, insbesondere von Kraftfahrzeugen, nach dem Oberbegriff des Anspruches 1.

Es ist bekannt, Handschaltgetriebe von Kraftfahrzeugen durch Stelleinrichtungen zu automatisieren. Der Fahrer des Kraftfahrzeuges betätigt den Schalthebel, um die verschiedenen Gänge einzulegen. Die Stelleinrichtung sorgt hierbei dafür, daß die Gassenwahl sowie das Einlegen des Ganges automatisch durchgeführt werden. Hierfür sind Hauptkolben vorgesehen, die mittels Hydraulikmedium verschoben werden und dadurch einen Steuerhebel betätigen, der mit der Schaltwelle des Handschaltgetriebes verbunden bzw. gekoppelt ist. Bekannte Stelleinrichtungen haben eine große Zahl von Ventilen, mit denen die Hauptkolben in die verschiedensten Stellungen verschoben werden. Dadurch sind diese Stelleinrichtungen konstruktiv aufwendig ausgebildet.

Bei der gattungsgemäßen Stelleinrichtung (US-A-5 279 172) greifen die beiden Hauptkolben mit ihren einander zugewandten Endabschnitten in Bohrungen eines zwischen ihnen liegenden Kurbelteiles ein, das eine weitere Öffnung aufweist, in der der Steuerhebel mit einem kalottenförmigen Lagerteil liegt. Die Kurbel sitzt auf einer senkrecht zur Achse der Hauptkolben liegenden Kolbenstange. Um eine einwandfreie Funktion der Stelleinrichtung zu gewährleisten, müssen die Bohrungen in der Kurbel zur Aufnahme der Endabschnitte der Hauptkolben miteinander fluchten. Dadurch ist die Herstellung der Kurbel aufwendig. Auch der Einbau der Kurbel zwischen die beiden Hauptkolben gestaltet sich umständlich und aufwendig. Zudem wird durch die zwischengeschaltete Kurbel die Baulänge der Stelleinrichtung vergrößert.

Der Erfindung liegt die Aufgabe zugrunde, die gattungsgemäße Stelleinrichtung so auszubilden, daß sie aus nur wenigen Bauteilen besteht und dennoch eine zuverlässige Automatisierung des Handschaltgetriebes ermöglicht.

Diese Aufgabe wird bei der gattungsgemäßen Stelleinrichtung erfindungsgemäß mit den kennzeichnenden Merkmalen des Anspruches 1 gelöst.

Bei der erfindungsgemäßen Stelleinrichtung liegen die beiden Hauptkolben mit ihren Stirnseiten unmittelbar am Eingriffsteil des Steuerhebels an. Dadurch hat die Stelleinrichtung nur wenige Bauteile, die einfach hergestellt und montiert werden können. Außerdem wird die Baulänge der Stelleinrichtung kurz gehalten.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: im Schnitt eine erfindungsgemäße Stelleinrichtung in einer Stellung, in welcher die Gasse I eines Schaltgetriebes angewählt ist,
- Fig. 2: in einer Darstellung entsprechend Fig. 1 die erfindungsgemäße Stelleinrichtung in einer Stellung, in welcher die Gasse II des Schaltgetriebes angewählt ist,
- Fig. 3: in einer Darstellung entsprechend Fig. 1 die erfindungsgemäße Stelleinrichtung in einer Stellung, in welcher die Gasse III des Schaltgetriebes angewählt ist,
- Fig. 4: in einer Darstellung entsprechend Fig. 1 die erfindungsgemäße Stelleinrichtung in einer Stellung, in welcher die Gasse für den Rückwärtsgang des Schaltgetriebes angewählt ist,
- Fig. 5: einen Schnitt längs der Linie V-V in Fig. 4.

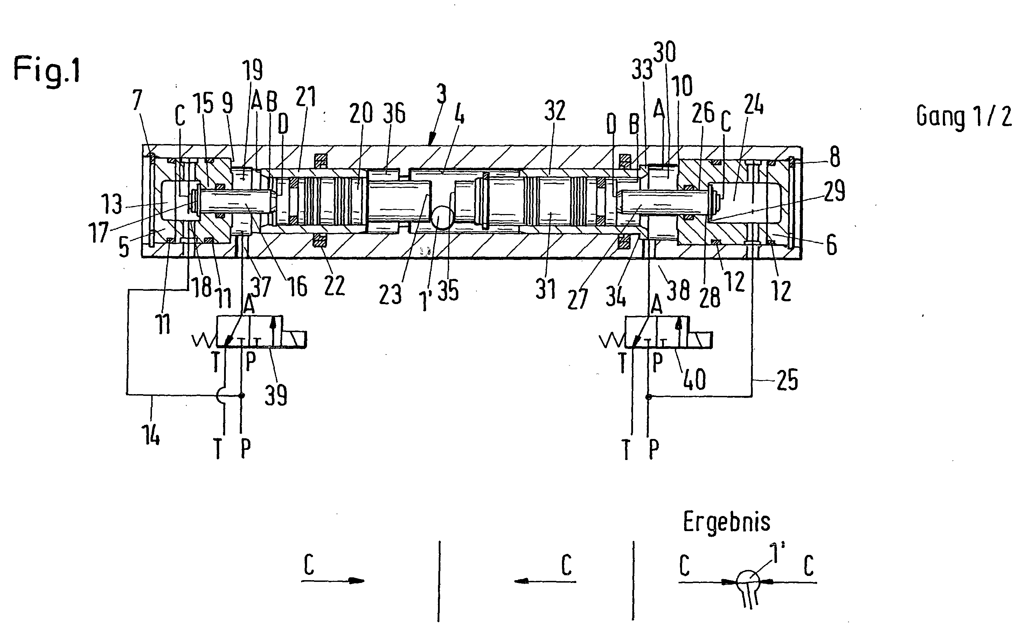

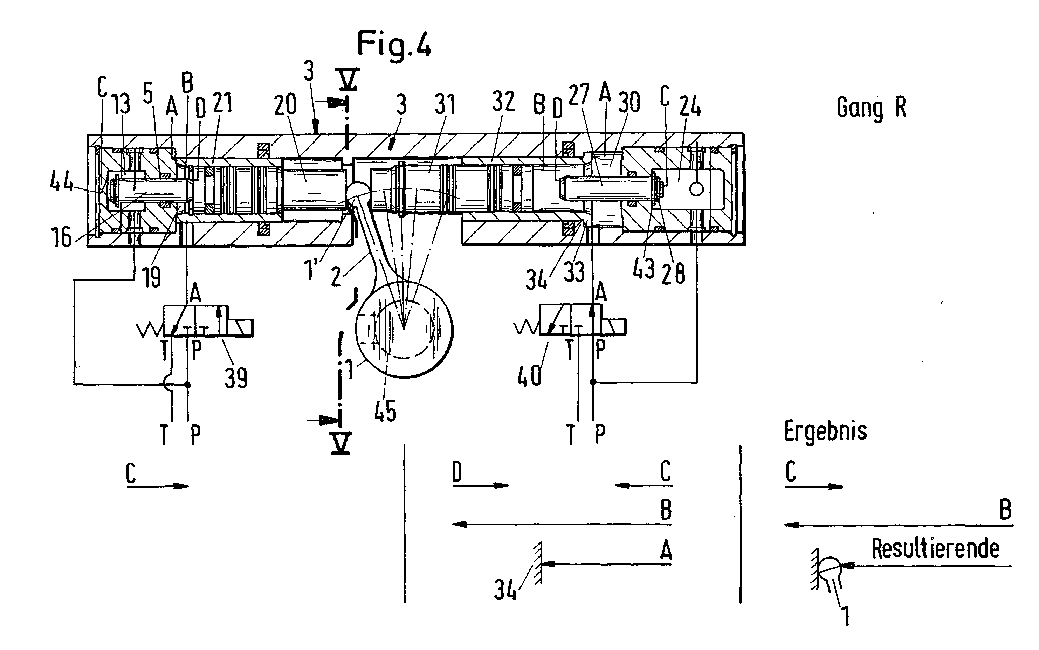

Mit der Stelleinrichtung wird eine Automatisierung von Handschaltgetrieben von Fahrzeugen, insbesondere von Pkws, erreicht. Der Fahrer des Fahrzeuges betätigt, wie bei herkömmlichen Handschaltgetrieben, einen Schalthebel, mit dem ein Steuerhebel 1 des Stellgetriebes entsprechend verstellt wird. Der Steuerhebel 1 ist in Fig. 4 vollständig dargestellt, während in den Fig. 1 bis 3 vom Steuerhebel 1 lediglich ein Eingriffsteil 1' am freien Ende eines radial abstehenden Armes 2 dargestellt ist. Bei Einsatz der Stelleinrichtung werden für ein Schaltgetriebe mit vier Gassen lediglich zwei Ventile benötigt, wodurch sich eine einfache konstruktive Ausbildung, insbesondere eine einfache Ansteuerung der beiden Ventile ergibt.

Die Stelleinrichtung hat ein Gehäuse 3 mit einer axialen Öffnung 4, die das Gehäuse 3 axial durchsetzt und die an beiden Enden des Gehäuses 3 durch jeweils einen Verschlußteil 5, 6 geschlossen ist. Die beiden Verschlußteile 5, 6 sind stirnseitig in das Gehäuse 3 eingesetzt und durch jeweils einen Sicherungsring 7, 8 lagegesichert. Die Verschlußteile 5, 6 liegen mit ihren inneren Enden jeweils an einer radial nach innen ragenden Schulter 9, 10 in der Bohrungswandung an. Gegenüber der Bohrungswandung sind die Verschlußteile 5, 6 durch jeweils wenigstens eine Dichtung 11, 12, vorzugsweise zwei mit axialem Abstand voneinander liegenden Ringdichtungen, abgedichtet.

Der Verschlußteil 5 weist einen Druckraum 13 auf, der über eine Leitung 14 mit einer Druckleitung P für Hydraulikmedium verbunden ist. In den Druckraum 13 mündet eine axial liegende Bohrung 15, in der abgedichtet ein Hilfskolben 16 verschiebbar gelagert ist. Sein in den Druckraum 13 ragendes Ende ist mit einem Anschlag 17 versehen, mit dem er in der in Fig. 1 dargestellten Lage an der dem gegenüberliegenden Verschlußteil 6 zugewandten Seitenwand 18 des Druckraumes 13 anliegt. Der Hilfskolben 16 ragt aus dem Verschlußteil 5 in einen Raum 19, der durch einen Teil der Durchgangsöffnung 4 gebildet ist.

In der in Fig. 1 dargestellten Lage liegt der Hilfskolben 16 innerhalb des Raumes 19 an der Stirnseite eines Hauptkolbens 20 an, der abgedichtet in einem zylindrischen Kolben 21 gelagert ist. Der Hauptkolben 20 ist zusammen mit dem Kolben 21 in der Durchgangsöffnung 4 verschiebbar gelagert. Der Kolben 21 ist durch wenigstens eine Dichtung 22 gegenüber der Wandung der Durchgangsöffnung 4 abgedichtet.

Der Hauptkolben 20 ragt über die vom Hilfskolben 16 abgewandte Stirnseite des Zylinderkolbens 21 und liegt mit seiner freien Stirnseite 23 am Eingriffsteil 1' des Steuerhebels 1 an.

Der Verschlußteil 6 hat ebenfalls einen Druckraum 24, der über eine Leitung 25 mit einer Druckleitung P für das Hydraulikmedium verbunden ist. In den Druckraum 24 führt eine axiale Bohrung 26, in der abgedichtet ein Hilfskolben 27 verschiebbar gelagert ist. Das innerhalb des Druckraumes 24 liegende Ende des Hilfskolbens 27 ist mit einem Anschlag 28 versehen, mit welchem der Hilfskolben 27 in der in Fig. 1 dargestellten Lage an der dem gegenüberliegenden Verschlußteil 5 zugewandten Seitenwand 29 des Druckraumes 24 anliegt.

Der Hilfskolben 27 ragt in einen Raum 30 der Durchgangsöffnung 4 und liegt mit seinem freien Ende an der Stirnseite eines Hauptkolbens 31 an, der in einer Buchse 32 axial verschiebbar gelagert ist. Sie bildet einen zylindrischen Kolben, der abgedichtet an der Wandung der Bohrung 4 anliegt und axial verschiebbar ist. Das dem Verschlußteil 6 zugewandte Ende des buchsenförmigen Kolbens 32 hat einen radial nach außen gerichteten Ringflansch 33, mit dem er an einer radial nach innen sich erstrekkenden Ringschulter 34 der Durchgangsöffnung 4 in der in Fig. 1 dargestellten Lage anliegt. Der Hauptkolben 31 liegt mit seiner dem Verschlußteil 5 zugewandten Stirnseite 35 ebenfalls an der Steuerhebel-Eingriffsteil 1' an.

Da die beiden Hauptkolben 20, 31 in den zylindrischen Kolben 21, 32 gelagert sind, haben die aus den Kolben 21, 32 ragenden Teile der Hauptkolben 20, 31 jeweils Abstand von der Wandung der Durchgangsöffnung 4. Der auf diese Weise gebildete Freiraum 36, der sich im Bereich zwischen den beiden zylindrischen Kolben 21, 32 erstreckt, steht mit der Atmosphäre in Verbindung. Das Gehäuse 3 ist hierzu mit wenigstens einer entsprechenden Öffnung versehen.

In die Räume 19, 30 mündet jeweils ein Anschluß 37 und 38.

Fig. 1 zeigt die Stellung der Stelleinrichtung, in welcher die Gasse I des zu schaltenden Getriebes des Kraftfahrzeuges angewählt worden ist. Aus dieser Gasse I kann dann in bekannter Weise der erste oder zweite Gang eingelegt werden. Zur Steuerung der verschiedenen Kolben sind zwei Ventile 39 und 40 vorgesehen, mit denen in noch zu beschreibender Weise die Kolben mit Hydraulikdruck beaufschlagt werden können. In der in Fig. 1 dargestellten Lage, in welcher die Gasse I für den ersten und zweiten Gang des Schaltgetriebes angewählt ist, sind die beiden Ventile 39, 40 so geschaltet, daß die beiden Räume 19 und 30 über die Anschlüsse 37, 38 zum Tank T Verbindung haben. Über die Leitungen 14, 25 ist das in den Druckräumen 13, 24 befindliche Hydraulikmedium unter Druck gesetzt.

Die in den Druckräumen 13, 24 befindlichen Stirnseiten der Hilfskolben 16, 27 haben die gleiche Fläche C. Über den Anschlag 17, 28 stützen sich die Hilfskolben 16, 27 an den Seitenwänden 18, 29 der Druckräume 13, 24 gehäuseseitig ab. Der buchsenförmige Kolben 32 liegt mit seinem Ringflansch 33 an der Ringschulter 34 des Gehäuses 3 an, ist somit ebenfalls gehäuseseitig abgestützt. Die Hilfskolben 16, 27 liegen mit ihren außerhalb der Druckkammern 13, 24 liegenden Stirnseiten an den Hauptkolben 20, 31 an, die ihrerseits am Eingriffsteil 1' anliegen. Der Freiraum 36 steht unter Atmosphärendruck, während die Räume 19, 30 mit Hydraulikmedium gefüllt sind, das jedoch, da es mit dem Tank T verbunden ist, unter Atmosphärendruck steht.

Die beiden Hilfskolben 16, 27 stützen sich über ihre Anschläge 17, 28 gehäuseseitig ab. Der buchsenförmige Kolben 32 ist über seinen Ringflansch 33 ebenfalls gehäuseseitig abgestützt. Der gegenüberliegende Hilfskolben 16 steht unter dem im Druckraum 13 herrschenden Hydraulikdruck und wird dadurch mit seinem Anschlag 17 in Anlage an der Seitenwand 18 des Druckraumes 13 gehalten. Da am Hilfskolben 16 der Hauptkolben 20 anliegt, wird auf diese Weise auf den Eingriffsteil 1' die entsprechende Gegenkraft aufgebracht, die der von der anderen Seite wirkenden Kraft entgegenwirkt. Da die beiden im Druckraum 13, 24 liegenden Stirnseiten der Hilfskolben 16, 27 die gleiche Fläche C haben, wird der Steuerhebel 1 in der Stellung für die Wahl der Gasse I gehalten. Die beiden entgegengesetzt zueinander gerichteten, auf die Eingriffsteil 1' wirkenden Kräfte, die durch die Druckbeaufschlagung der Stirnseiten der Hilfskolben mit der Fläche C hervorgerufen werden, sind gleich. Dies ist durch die gleich großen Pfeile C verdeutlicht.

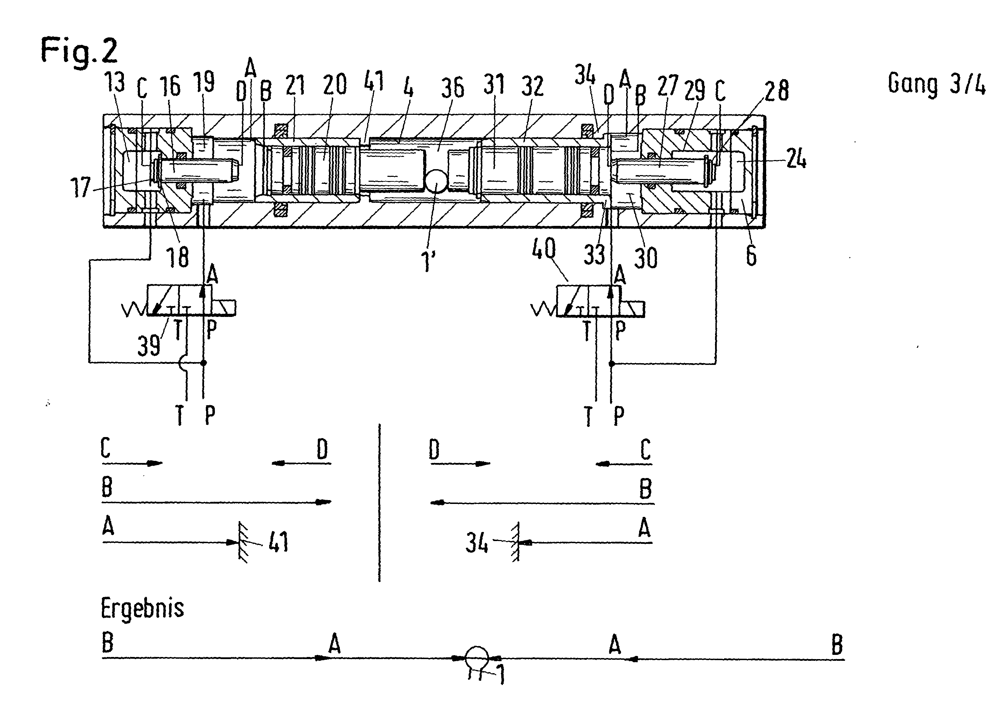

Fig. 2 zeigt die Stellung der verschiedenen Kolben, wenn der Steuerhebel 1 so verstellt wird, daß die Gasse II für den dritten und vierten Gang angewählt wird. In diesem Falle wird der Steuerhebel 1 bzw. sein Eingriffsteil 1' im Uhrzeigersinn geschwenkt, bezogen auf die zeichnerische Darstellung. Bei dieser Verstellung des Steuerhebels wird der Hauptkolben 31, bezogen auf die Stellung gemäß Fig. 1, nach rechts verschoben. Dadurch wird der Hilfskolben 27 in gleicher Richtung verschoben. Sein Anschlag 28 hebt von der Seitenwand 29 des Druckraumes 30 ab. Die beiden Ventile 39, 40 werden so geschaltet, daß das Hydraulikmedium in den Räumen 19, 30 jeweils unter Druck gesetzt wird. Das Hydraulikmedium in den Druckräumen 13, 24 wird weiterhin unter Druck gesetzt. Der Hilfskolben 16 bleibt in seiner Lage, da er mit dem Anschlag 17 an der Seitenwand 18 des Druckraumes 13 anliegt. Da das Hydraulikmedium im Raum 19 unter Druck steht, werden der Hauptkolben 20 und der auf ihm sitzende buchsenförmige Kolben 21 mit Druck beaufschlagt, so daß sie in Fig. 2 nach links bewegt werden. In der Stellung des Steuerhebels 1 für die Gasse II liegt der Kolben 21 an einem radial nach innen gerichteten Bund 41 in der Wandung der Durchgangsöffnung 4 an. Der Hauptkolben 20 ragt mit radialem Spiel durch den Bund 41. Der gegenüberliegende buchsenförmige Kolben 32 bleibt mit seinem Ringflansch 33 in Anlage an der Ringschulter 34, da das Hydraulikmedium im Raum 30 unter Druck steht.

Die sich bei dieser Stellung der verschiedenen Kolben ergebenden Kraftverhältnisse sind in Fig. 2 schematisch dargestellt. Da die beiden Stirnseiten des Hilfskolbens 16 die gleiche Fläche C und D haben und beide Stirnseiten mit Hydraulikdruck beaufschlagt sind, sind die in entgegengesetzten Richtungen wirkenden Kräfte gleich groß. Auf die Stirnseite B des Hauptkolbens 20 wirkt Hydraulikdruck. Da der Freiraum 36, der nicht mit Hydraulikmedium gefüllt ist, mit der Atmosphäre in Verbindung steht, wirkt auf den Hauptkolben 20 lediglich die auf die Stirnseite B wirkende Kraft, die infolge der größeren Fläche B wesentlich größer ist als die auf die wesentlich kleinere Stirnseite C des Hilfskolbens 16 in gleicher Richtung wirkende Kraft.

Da der andere Hilfskolben 27 ebenfalls die gleich großen Stirnseiten C und D hat, die jeweils mit gleichem Druck beaufschlagt sind, wirken die entgegengesetzt zueinander gerichteten gleich großen Kräfte auf den Hilfskolben 27, gekennzeichnet durch die Pfeile C und D. Die dem Verschlußteil 6 zugewandte Stirnseite des Hauptkolbens 31 hat die Fläche B, die gleich groß ist wie die entsprechende Stirnseite des gegenüberliegenden Hauptkolbens 20. Die auf die Stirnseiten mit den Flächen B der Hauptkolben 20, 31 wirkenden Kräfte sind gleich groß und entgegengesetzt.

Die Stirnflächen A der Kolben 21, 32 werden ebenfalls mit dem in den Räumen 19, 30 befindlichen Hydraulikmedium unter Druck gesetzt. Der Kolben 21 ist am Bund 41 und der Kolben 32 über seinen Ringflansch 33 an der Ringschulter 34 des Gehäuses 3 abgestützt. Die entsprechenden Kräfte sind wiederum einander entgegengerichtet und wegen der gleich großen Flächen A auch gleich groß.

Somit ergibt sich, daß auf den Steuerhebel 1 zu beiden Seiten die Kräfte A, B wirken, die entgegengesetzt zueinander gerichtet und gleich groß sind. Der Steuerhebel 1 wird dadurch in seiner der Gasse II zugeordneten Lage gehalten. Zum Verschwenken des Steuerhebels 1 aus der Stellung gemäß Fig. 1 in die Stellung gemäß Fig. 2 muß somit nur die auf die im Druckraum 24 befindliche Fläche C des Hilfskolben 27 wirkende Kraft überwunden werden. Würde der Steuerhebel 1 in dieser Lage wieder freigegeben, würde er durch die auf den Hilfskolben 27 ausgeübte Kraft in die in Fig. 1 dargestellte Ausgangslage zurückgeschwenkt werden.

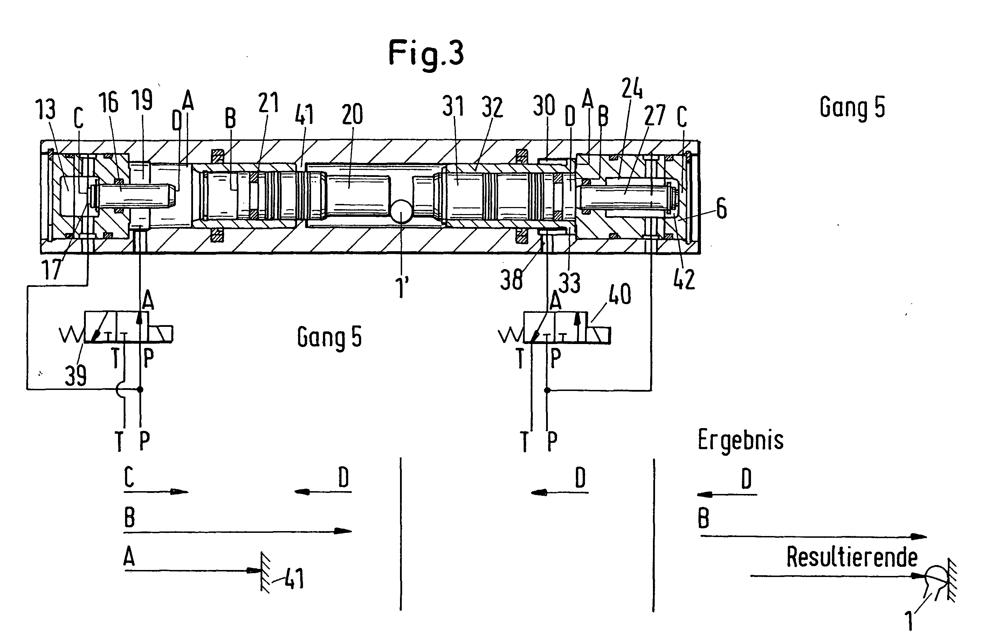

Der Steuerhebel 1 kann noch weiter im Uhrzeigersinn in die in Fig. 3 dargestellte Lage verschwenkt werden. Dann wird die Gasse III angewählt, aus der heraus der fünfte und gegebenenfalls der sechste Gang eingelegt werden können. Das Ventil 39 bleibt in seiner Schaltstellung gemäß Fig. 2, so daß das Hydraulikmedium im Druckraum 13 sowie im Raum 19 unter Druck gesetzt wird. Der Hilfskolben 16 bleibt somit in seiner Anschlagstellung. Auch der buchsenförmige Kolben 21 bleibt in Anlage am Bund 41. Das Ventil 40 wird so umgeschaltet, daß der Anschluß 38 mit dem Tank T verbunden wird. Das Hydraulikmedium im Druckraum 24 wird weiter unter Druck gesetzt. Der Hauptkolben 20 wird infolge des auf seine linke Stirnseite wirkenden Hydraulikdruckes weiter nach rechts verschoben. Da diese druckbeaufschlagte Stirnseite des Hauptkolbens 20 eine größere Fläche hat als die vom Hydraulikmedium im Druckraum 24 beaufschlagte Stirnseite des Hilfskolbens 27, wird über den Eingriffsteil 1' der Hauptkolben 31, der auf ihm sitzende zylindrische Kolben 32 und der Hilfskolben 27 nach links verschoben, bis der Hilfskolben 27 an der endseitigen Seitenwand 42 des Druckraumes 24 zur Anlage kommt. Da der Raum 30 zum Tank T hin entlastet ist und damit das Hydraulikmedium in diesem Raum unter Atmosphärendruck steht, wird der Kolben 32 nach rechts verschoben, bis er mit seinem Ringflansch 33 am Verschlußteil 6 anliegt. Der Hilfskolben 27 liegt am Hauptkolben 31 an, der zusammen mit dem gegenüberliegenden Hauptkolben 20 den Steuerhebel 1 in seiner der Gasse III entsprechenden Lage hält.

In Fig. 3 sind wiederum die entsprechenden Kraftverhältnisse eingezeichnet. Die beiden Stirnseiten des Hilfskolbens 16 mit den gleich großen Flächen C, D werden jeweils mit Hydraulikmedium beaufschlagt. Er bleibt dadurch mit seinem Anschlag 17 in der gezeichneten Anschlagstellung am Verschlußteil 5. Auf den Hilfskolben 16 wirken somit die entgegengesetzt zueinander gerichteten gleich großen Kräfte, die mit den Pfeilen C und D gekennzeichnet sind. Das im Raum 19 unter Druck stehende Hydraulikmedium wirkt auf die entsprechende Stirnseite des Hauptkolbens 20. Die entstehende Kraft ist mit B im Kräftediagramm gekennzeichnet. Außerdem wirkt dieser Hydraulikdruck auch auf die Stirnseite A des zylindrischen Kolbens 21, der unter diesem Hydraulikdruck am Bund 41 anliegt. Die entstehende Kraft ist im Kräftediagramm mit A bezeichnet.

Auf der gegenüberliegenden Seite des Eingriffsteils 1' ist lediglich die durch den Pfeil D gekennzeichnete Kraft wirksam, die sich dadurch ergibt, daß auf die Stirnseite D des Hilfskolbens 27 das unter Atmosphärendruck stehende Hydraulikmedium wirkt. Da sich die entgegengesetzt zueinander gerichteten, auf den Hilfskolben 16 ausgeübten Kräfte aufheben und die auf den zylindrischen Kolben 21 wirkende Hydraulikkraft gehäuseseitig aufgenommen wird, wirkt auf den Steuerhebel 1 von links lediglich die durch den Hauptkolben 20 ausgeübte Kraft, die durch den Pfeil B gekennzeichnet ist. Auf der gegenüberliegenden Seite des Steuerhebels 1 wirkt lediglich die durch den Pfeil D gekennzeichnete Kraft, die entgegengesetzt zur Kraft B wirksam ist. Somit wirkt auf den Steuerhebel 1 eine resultierende Kraft, die den Steuerhebel nach rechts belastet, wie in Fig. 3 schematisch dargestellt ist. Somit wird der Steuerhebel 1 in dieser Stellung zuverlässig gehalten.

Fig. 4 zeigt den Fall, daß der Steuerhebel 1, ausgehend von der Stellung gemäß Fig. 1, im Gegenuhrzeigersinn in die Gasse IV verschwenkt wird, in welcher der Rückwärtsgang R eingelegt werden kann. Die beiden Ventile 39, 40 sind nunmehr so geschaltet, daß über das Ventil 39 das im Raum 19 befindliche Hydraulikmedium zum Tank T hin entlastet ist, während das Hydraulikmedium im Druckraum 13 unter Druck gesetzt ist. Über das Ventil 40 wird das Hydraulikmedium im Druckraum 24 sowie im Raum 30 unter Druck gesetzt.

Der Hilfskolben 27 wird infolge des unter Druck stehenden Hydraulikmediums im Druckraum 24 nach links verschoben, bis der Anschlag 28 an der dem Hauptkolben 31 zugewandten Seitenwand 43 des Druckraumes 24 anliegt. Infolge des unter Druck stehenden Hydraulikmediums im Raum 30 wird der Hauptkolben 31 nach links verschoben, wobei das Hydraulikmedium auf die Stirnseite mit der Fläche B des Hauptkolbens 31 wirkt. Der zylindrische Kolben 32 wird ebenfalls nach links verschoben, da sein Ringflansch 33 ebenfalls durch das im Raum 30 befindliche Hydraulikmedium mit Druck beaufschlagt wird. Der Kolben 32 wird so weit verschoben, bis der Ringflansch 33 an der Ringschulter 34 des Gehäuses 3 anliegt.

Da das Hydraulikmedium im Raum 19 mit dem Tank T verbunden ist, läßt sich der Hauptkolben 20 nach links verschieben. Er nimmt hierbei den Hilfskolben 16 gegen den im Druckraum 13 herrschenden Druck des Hydraulikmediums mit, bis der Hilfskolben 16 an der endseitigen Seitenwand 44 des Druckraumes 13 zur Anlage kommt. Der Kolben 21, welcher auf dem Hauptkolben 20 sitzt, kommt zur Anlage am Verschlußteil 5.

Auf den Steuerhebel 1 wirkt somit von links lediglich die durch den Pfeil C gekennzeichnete Kraft, die infolge der gehäuseseitigen Abstützung des Hilfskolbens 16 mittels seiner Stirnseite mit der Fläche C erzeugt wird.

Auf den Hilfskolben 27 wirken die entgegengesetzt zueinander gerichteten, durch das unter Druck stehende Hydraulikmedium in den Räumen 24 und 30 erzeugten Kräfte.

Da die beiden Stirnseiten des Hilfskolbens 27 die gleich großen Flächen C, D haben, heben die entgegengesetzt zueinander wirkenden Kräfte einander auf. Eine weitere, auf den Steuerhebel 1 von rechts wirkende Kraft ergibt sich durch die Druckbeaufschlagung des Hauptkolbens 31 an dessen Stirnseite mit der Fläche B. Die entsprechend auftretende und auf den Eingriffsteil 1' wirkende Kraft ist in Fig. 4 im Kräftediagramm mit dem Pfeil B gekennzeichnet.

Auch auf den zylindrischen Kolben 32 wirkt über die Fläche A die vom Hydraulikmedium im Raum 30 ausgeübte Kraft, die im Kräftediagramm in Fig. 4 durch den Pfeil A gekennzeichnet ist. Diese Kraft wird jedoch von der Ringschulter 34 aufgenommen, so daß sie nicht auf den Steuerhebel 1 einwirkt. Somit ergibt sich, daß auf den Steuerhebel 1 von links die durch den Pfeil C gekennzeichnete Kraft und von rechts die wesentlich größere, durch den Pfeil B gekennzeichnete Kraft wirkt. Dadurch wirkt von rechts auf den Steuerhebel eine resultierende Kraft, die ihn sicher in der verschwenkten Lage hält.

Den beiden Ventilen 39, 40 kann eine gemeinsame Pumpe mit entsprechend dimensioniertem großen Fördervolumen zugeordnet sein. Diese Pumpe wird beim Betätigen des im Kraftfahrzeug befindlichen Schalthebels eingeschaltet, wodurch über die entsprechende Verschiebung der Kolben der Steuerhebel 1 in der beschriebenen Weise in die gewünschte Richtung verschwenkt wird.

Die Pumpe kann aber auch über ein (nicht dargestelltes) Ventil auf drucklosen Umlauf geschaltet werden. In diesem Falle wird das Hydraulikmedium, solange ein Schaltvorgang nicht stattfindet, nur umgewälzt und nicht unter Druck gesetzt. Sobald jedoch ein Schaltvorgang ausgeführt werden soll und der Schalthebel des Kraftfahrzeuges entsprechend verstellt wird, wird dieses Ventil in die entsprechende Schaltstellung gebracht. Dann werden die P-Anschlüsse der jeweiligen Ventile 39, 40 mit Druck versorgt.

Es ist auch möglich, beiden Ventilen 39 und 40 jeweils eine Pumpe mit kleinem Fördervolumen zuzuordnen, die mit einem Speicher kombiniert sind. Zwischen der beschriebenen Stelleinrichtung und diesem Speicher ist eine (nicht dargestellte) Sperreinrichtung vorgesehen, um einen leckölbedingten Ölverlust im Speicher zu vermeiden.

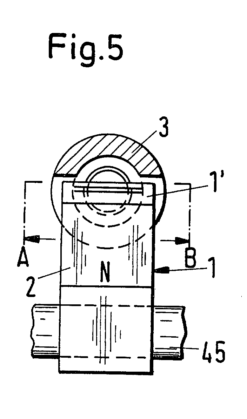

Der Steuerhebel 1 sitzt, wie sich aus den Fig. 4 und 5 ergibt, auf einer Schaltwelle 45 des Schaltgetriebes des Kraftfahrzeuges. Wird darum der Steuerhebel 1 in der beschriebenen Weise in die verschiedenen Stellungen geschwenkt und damit die gewünschte Gasse angewählt, wird die Schaltwelle 45 in entsprechendem Maße um ihre Achse gedreht. Um dann den jeweiligen Gang in der angewählten Gasse einzulegen, wird die Schaltwelle 45 in der gewünschten Richtung axial verschoben. In Fig. 5 sind die beiden äußersten Stellungen des Eingriffsteiles 1' dargestellt, wenn der Steuerhebel 1 mit der Schaltwelle 45 aus seiner mit ausgezogenen Linien dargestellten Neutralstellung nach links oder rechts zum Einlegen des jeweiligen Ganges in der angewählten Gasse verschoben wird. Der etwa zylindrisch ausgebildete Eingriffsteil 1' ist in Achsrichtung der Schaltwelle 45 so lang, daß er stets zwischen den Hauptkolben 20, 31 liegt. Wird der Steuerhebel 1 in Fig. 5 nach links in die Stellung A verschoben, werden die geraden Gänge eingelegt. Wird der Steuerhebel 1 in Fig. 5 nach rechts in die Stellung B verschoben, werden die ungeraden Gänge eingelegt.

## Patentansprüche

1. Stelleinrichtung zur Automatisierung von Handschaltgetrieben von Fahrzeugen, insbesondere von Kraftfahrzeugen, mit einem Gehäuse (3), in dem zwei Hauptkolben (20, 31), denen jeweils ein Ventil (39, 40) zugeordnet ist, verschiebbar gelagert sind, zwischen denen ein mit einer Schaltwelle (45) des Handschaltgetriebes drehfest verbundener Steuerhebel (1) zur Gassenwahl verstellbar gehalten ist und die, gesteuert über die Ventile (39, 40), mit Hydraulikmedium beaufschlagbar sind, wobei der Steuerhebel (1) einen radial abstehenden Arm (2) mit einem äußeren Eingriffsteil (1') aufweist, der mit den Hauptkolben (20, 31) zusammenwirkt, **dadurch gekennzeichnet, daß** die beiden Hauptkolben (20, 31) mit ihren einander zugewandten Stirnseiten (23, 35) an einander gegenüberliegenden Seiten des Eingriffsteils (1') anliegen.

2. Stelleinrichtung nach Anspruch 1,
**dadurch gekennzeichnet, daß** jedem Hauptkolben (20, 31) ein Hilfskolben (16, 27) zugeordnet ist, dessen mit dem Hydraulikmedium beaufschlagbare Stirnseite kleiner ist als die mit Hydraulikmedium beaufschlagbaren Stirnseiten der Hauptkolben (20, 31).

3. Stelleinrichtung nach Anspruch 1 oder 2,
**dadurch gekennzeichnet, daß** die einander zugewandten Stirnseiten der Hauptkolben (20, 31) in einem unter Atmosphärendruck stehenden Raum (36) des Gehäuses (3) liegen.

4. Stelleinrichtung nach Anspruch 2 oder 3,
**dadurch gekennzeichnet, daß** die vom Hauptkolben (20, 31) abgewandte Stirnseite der Hilfskolben (16, 27) in einem Druckraum (13, 24) liegt.

5. Stelleinrichtung nach Anspruch 4,
**dadurch gekennzeichnet, daß** der Druckraum (13, 24) mit dem Ventil (39, 40) verbunden ist.

6. Stelleinrichtung nach Anspruch 4 oder 5,
**dadurch gekennzeichnet, daß** der Hilfskolben (16, 27) mit einem Anschlag (17, 28) versehen ist, mit dem er zumindest in einer Stellung des Steuerhebels (1) an einer dem Hauptkolben (20, 31) zugewandten Seitenwand (18, 29) des Druckraumes (13, 24) unter Druckbeaufschlagung anliegt.

7. Stelleinrichtung nach einem der Ansprüche 2 bis 6,
**dadurch gekennzeichnet, daß** die beiden Stirnseiten der Hilfskolben (16, 27) gleich groß sind.

8. Stelleinrichtung nach einem der Ansprüche 2 bis 7,
**dadurch gekennzeichnet, daß** die dem zugehörigen Hilfskolben (16, 27) zugewandte Stirnseite des Hauptkolbens (20, 31) größer ist als die benachbarte Stirnseite des jeweiligen Hilfskolbens (16, 27).

9. Stelleinrichtung nach einem der Ansprüche 1 bis 8,
**dadurch gekennzeichnet, daß** die einander zugewandten Stirnseiten der Hauptkolben (20, 31) kleinere Fläche haben als die anderen Stirnseiten der Hauptkolben (20, 31).

10. Stelleinrichtung nach einem der Ansprüche 1 bis 9,
**dadurch gekennzeichnet, daß** die voneinander abgewandten Stirnseiten der Hauptkolben (20, 31) jeweils in einem Druckraum (19, 30) liegen, der an jeweils ein Ventil (39, 40) angeschlossen ist.

11. Stelleinrichtung nach einem der Ansprüche 1 bis 10,
**dadurch gekennzeichnet, daß** die Hauptkolben (20, 31) in jeweils einem buchsenförmigen Kolben (21, 32) gelagert sind, der im Gehäuse (3) verschiebbar gelagert ist.

12. Stelleinrichtung nach Anspruch 11,
**dadurch gekennzeichnet, daß** die buchsenförmigen Kolben (21, 32) zumindest in einer Stellung am Gehäuse (3) gegen den Hydraulikdruck abgestützt sind.

13. Stelleinrichtung nach Anspruch 11 oder 12,
**dadurch gekennzeichnet, daß** die voneinander abgewandten Stirnseiten der buchsenförmigen Kolben (21, 32) mit Hydraulikmedium beaufschlagbar sind.

14. Stelleinrichtung nach einem der Ansprüche 11 bis 13,
**dadurch gekennzeichnet, daß** die einander zugewandten Stirnseiten der buchsenförmigen Kolben (21, 32) mit Atmosphärendruck beaufschlagt sind.

## Claims

1. An actuator for automation of manual gearboxes in vehicles, in particular motor vehicles, with a housing (3) in which two main pistons (20, 31) with each of which a respective valve (39, 40) is associated, are displaceably positioned, between which a control lever (1), non-rotatably connected to a selector shaft (45) of the manual gearbox, is adjustably held for gate selection, and which, controlled via the valves (39, 40) are actuable with hydraulic medium, the control lever (1) having a radially projecting arm (2) with an outer meshing part (1') which co-operates with the main pistons (20, 31), **characterised in that** the two main pistons (20, 31) rest, with their front faces (23, 35) facing one another, against mutually opposite sides of the meshing part (1').

2. An actuator according to Claim 1,
**characterised in that** an auxiliary piston (16, 27) is associated with each main piston (20, 31), the hydraulic-medium actuable front face of the said auxiliary piston (16, 27) being smaller than the hydraulic-medium actuable front faces of the main pistons (20, 31).

3. An actuator according to Claim 1 or 2,
**characterised in that** the facing front faces of the main pistons (20, 31) are located within a chamber (36) of the housing (3) under atmospheric pressure.

4. An actuator according to Claim 2 or 3,
**characterised in that** the front face of the auxiliary pistons (16, 27) which faces away from the main piston (20, 31) is located within a pressure chamber (13, 24).

5. An actuator according to Claim 4,
**characterised in that** the pressure chamber (13, 24) is connected to the valve (39, 40).

6. An actuator according to Claim 4 or 5,
**characterised in that** the auxiliary piston (16, 27) is provided with a limiting stop (17, 28) with which it rests, under the action of pressure, against a side wall (18, 29) of the pressure chamber (13, 24) which faces the main piston (20, 31) in at least one position of the control lever (1).

7. An actuator according to one of Claims 2 to 6,
**characterised in that** the two front faces of the auxiliary pistons (16, 27) are of equal size.

8. An actuator according to one of Claims 2 to 7,
**characterised in that** front face of the main piston (20, 31) facing the associated auxiliary piston (16, 27) is larger than the adjacent front face of the respective auxiliary piston (16, 27).

9. An actuator according to one of Claims 1 to 8,
**characterised in that** the facing front faces of the main pistons (20, 31) have a smaller surface area than the other front faces of the main pistons (20, 31).

10. An actuator according to one of Claims 1 to 9,
**characterised in that** the front faces of the main pistons (20, 31) facing away from one another are each located in a respective pressure chamber (19, 30), each of which is linked to a respective valve (39, 40).

11. An actuator according to one of Claims 1 to 10,
**characterised in that** the main pistons (20, 31) are each mounted within a respective sleeve-like piston (21, 32) which is displaceably mounted within the housing (3).

12. An actuator according to Claim 11,
**characterised in that** the sleeve-like pistons (21, 32) are supported in at least one position against the housing (3), counter to the hydraulic pressure.

13. An actuator according to Claim 11 or 12,
**characterised in that** the front faces of the sleeve-like pistons (21, 32) facing away from one another are actuable with hydraulic medium.

14. An actuator according to Claim 11 to 13,
**characterised in that** the front faces of the sleeve-like pistons (21, 32) facing one another are actuable with atmospheric pressure.

## Revendications

1. Dispositif de commande pour automatiser des boîtes de vitesses manuelles de véhicules, en particulier de véhicules automobiles, comportant un boîtier (3) dans lequel sont montés en translation deux pistons principaux (20, 31) auxquels est associée une soupape respective (39, 40), entre lesquels un levier de commande (1) relié solidairement en rotation à un arbre de commutation (45) de la boîte de vitesses manuelle est retenu de façon déplaçable pour la sélection des voies, et qui peuvent être attaqués par un fluide hydraulique de façon commandée via les soupapes (39, 40), dans lequel le levier de commande (1) comprend un bras (2) radialement en saillie, comportant une partie d'engagement extérieure (1') et coopérant avec les pistons principaux (20, 31), **caractérisé en ce que** les deux pistons principaux (20, 31) prennent appui par leurs faces frontales (23, 35) orientées l'une vers l'autre contre des faces mutuellement opposées de la partie d'engagement (1').

2. Dispositif de commande selon la revendication 1, **caractérisé en ce qu'**à chaque piston principal (20, 31) est associé un piston auxiliaire (16, 27) dont la face frontale susceptible d'être attaquée par le fluide hydraulique est plus petite que les faces frontales des pistons principaux (20, 31) susceptibles d'être attaquées par le fluide hydraulique.

3. Dispositif de commande selon l'une ou l'autre des revendications 1 et 2, **caractérisé en ce que** les faces frontales orientées l'une vers l'autre des pistons principaux (20, 31) se situent dans une chambre (36) du boîtier (3) sous pression atmosphérique.

4. Dispositif de commande selon l'une ou l'autre des revendications 2 et 3, **caractérisé en ce que** la face frontale des pistons auxiliaires (16, 17), détournée du piston principal (20, 31), se situe dans une chambre sous pression (13, 24).

5. Dispositif de commande selon la revendication 4, **caractérisé en ce que** la chambre sous pression (13, 24) est reliée à la soupape (39, 40).

6. Dispositif de commande selon l'une ou l'autre des revendications 4 et 5, **caractérisé en ce que** le piston auxiliaire (16, 27) est pourvu d'une butée (17, 28) par laquelle il prend appui, du moins dans une position du levier de commande (1), sous l'attaque d'une pression, contre une paroi latérale (18, 29), tournée vers le piston principal (20, 31), de la chambre sous pression (13, 24).

7. Dispositif de commande selon l'une quelconque des revendications 2 à 6, **caractérisé en ce que** les deux faces frontales des pistons auxiliaires (16, 27) sont de même taille.

8. Dispositif de commande selon l'une quelconque des revendications 2 à 7, **caractérisé en ce que** la face frontale du piston principal (20, 31) tournée vers le piston auxiliaire associé (16, 27) est plus grande que la face frontale voisine du piston auxiliaire respectif (16, 27).

9. Dispositif de commande selon l'une quelconque des revendications 1 à 8, **caractérisé en ce que** les faces frontales tournées l'une vers l'autre des pistons principaux (20, 31) présentent chacune une surface inférieure à celle des autres faces frontales des pistons principaux (20,31).

10. Dispositif de commande selon l'une quelconque des revendications 1 à 9, **caractérisé en ce que** les faces frontales détournées l'une de l'autre des pistons principaux (20, 31) se situent chacune dans une chambre sous pression (19, 30) qui est raccordée à une soupape respective (39, 40).

11. Dispositif de commande selon l'une quelconque des revendications 1 à 10, **caractérisé en ce que** les pistons principaux (20, 31) sont montés chacun dans un piston (21, 32) en forme de douille qui est monté en translation dans le boîtier (3).

12. Dispositif de commande selon la revendication 11, **caractérisé en ce que** les pistons (21, 32) en forme de douille sont soutenus à l'encontre de la pression hydraulique dans au moins une position sur le boîtier (3).

13. Dispositif de commande selon l'une ou l'autre des revendications 11 et 12, **caractérisé en ce que** les faces frontales détournées l'une de l'autre des pistons (21, 32) en forme de douille sont susceptibles d'être attaquées par le fluide hydraulique.

14. Dispositif de commande selon l'une quelconque des revendications 11 à 13, **caractérisé en ce que** les faces frontales tournées l'une vers l'autre des pistons (21, 32) en forme de douille sont susceptibles d'être attaquées par la pression atmosphérique.
